# EUROPÄISCHE PATENTSCHRIFT

(11) **EP 1 760 507 B1**
(45) Veröffentlichungstag und Bekanntmachung des Hinweises auf die Patenterteilung: **25.03.2009**
(21) Anmeldenummer: 06018589.9
(22) Anmeldetag: 05.09.2006
(51) Int. Cl.: G02B 6/44, B32B 1/04

(54) **Vliesband und damit ausgestattetes Optisches Kabel, und Verfahren zu ihren Herstellung**
Non-woven tape and optical cable incorporating same, and methods for their production
Bande de non-tissé et cable optique l'incorporant, et procédés de leur production

(30) Priorität: 06.09.2005 DE 102005042330
(43) Veröffentlichungstag der Anmeldung: 07.03.2007
(73) Patentinhaber: CCS Technology, Inc., Wilmington, DE 19803 (US)
(72) Erfinder: Müller, Thomas, 96515 Sonneberg (DE); Stöcklein, Waldemar, 96450 Coburg (DE)
(74) Vertreter: Epping - Hermann - Fischer

(56) Entgegenhaltungen:
- EP-A- 0 974 980
- DE-U1- 20 113 418
- DE-U1- 29 918 374
- JP-A- 8 201 669
- US-A1- 2004 229 536

## Beschreibung

Die vorliegende Erfindung betrifft ein optisches Kabel, bei dem ein Kabelkern von einer Vlies enthaltenden Hülle umgeben ist. Des Weiteren betrifft die Erfindung ein Vliesband zur Verwendung bei der Herstellung eines optischen Kabels. Ferner betrifft die Erfindung ein Verfahren zur Herstellung eines derartigen Vliesbandes sowie ein Verfahren zur Herstellung eines optischen Kabels.

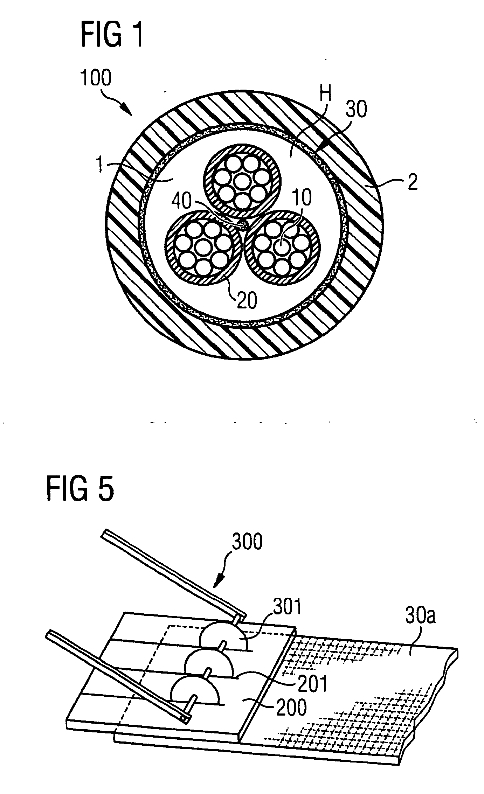

Figur 1 zeigt einen Querschnitt durch ein optisches Kabel mit einem Kabelkern 1 und einer den Kabelkern umgebenden äußeren Schicht 2. Die äußere Schicht enthält ein Polymermaterial. Der Kabelkern 1 umfasst im Beispiel der Figur 1 drei optische Übertragungselemente 20, die in ihrem Inneren mehrere Lichtwellenleiter 10 aufweisen. Zur Stabilisierung des optischen Kabels befindet sich im Zentrum des Kabelkerns ein Quellelement 40, beispielsweise ein Quellgarn. Zwischen den optischen Übertragungselementen 20 und der äußeren Schicht 2 befindet sich ein Hohlraum H.

Der Kern ist in Längsrichtung des Kabels von einer Hülle 30 aus Vlies umgeben. Die Vlieshülle 30 dient der thermischen Isolation zwischen dem Kabelkern 1 und der der äußeren Schicht 2. Des Weiteren verhindert die Vlieshülle in einer speziellen Ausführungsform, dass sich beim Eindringen von Feuchtigkeit in das Kabel Wasser in Längsrichtung des optischen Kabels innerhalb des Hohlraums H ausbreitet. Wenn die Vlieshülle zusätzlich diesem Zweck verwendet wird, besteht sie aus einem Material, das bei Feuchtigkeit, insbesondere bei Kontakt mit Wasser, aufquillt. Das Quellen der einer Feuchtigkeit ausgesetzten Vlieshülle führt zum Verschließen des Hohlraums zwischen der äußeren Schicht 2 und den optischen Übertragungselementen 20, so dass beim Eindringen von Feuchtigkeit eine Ausbreitung des Wassers in Kabellängsrichtung verhindert wird. Über den Kabelkern mit der hüllförmigen Vliesbewicklung wird anschließend der Kabelmantel aus Kunststoff, z. B. aus Polyethylen, Polycarbonat oder Kombinationen aus anderen thermoplastischen Materialien, extrudiert.

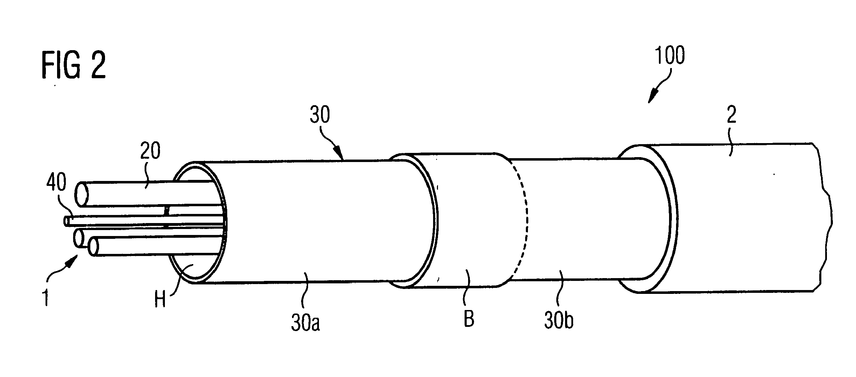

Ein optisches Kabel ist im Allgemeinen mehrere Kilometer lang. Aus fertigungstechnischen Gründen kann die Vlieshülle bisher nicht als eine einzige durchgehende Hülle hergestellt werden, die das gesamte Kabel in Längsrichtung umgibt. Figur 2 zeigt ein Teilstück des optischen Kabels der Figur 1 in Längsrichtung. Das Kabel umfasst die äußere Schicht 2 und die Vlieshülle 30. Der Hohlraum H innerhalb der Vlieshülle 30 weist die drei optischen Übertragungselementen 20, die beispielsweise als Lichtwellenleiteradern ausgebildet sind, und das Quellgarn 40 auf. Da die Länge des Kabelkerns 1 deutlich länger als die Länge eines Vliesbandes ist, ist der Kabelkern 1 von einem Vliesband, das aus kurzen Vliesbandabschnitten zusammengefügt wird, umgeben. Die einzelnen Vliesbandabschnitte umgeben jeweils verschiedene Längsabschnitte des Kabels. In Längsrichtung des Kabels hintereinander angeordnete Vliesbandabschnitte, die jeweils hintereinander angeordnete Längsabschnitte des Kabels umgeben, sind an Überlappungsstellen miteinander verklebt. Das aus den einzelnen Vliesbandabschnitten bestehende Vliesband wird anschließend zu einer Hülle geformt. Ein optisches Kabel von einer Länge von 6 km kann beispielsweise 15 solcher hüllförmiger Vliesbandabschnitte aufweisen.

In Figur 2 ist der Kabelkern 1 von einem hüllförmigen Vliesbandabschnitt 30a und einem hüllförmigen Vliesbandabschnitt 30b umgeben, die jeweils hintereinander angeordnete Längsabschnitte des Kabels umgeben. Zur Herstellung einer Vlieshülle, die die gesamte Länge des Kabelkerns umschließt, überlappen sich die beiden Vliesbandabschnitte 30a und 30b in einem Überlappungsbereich B. Im Überlappungsbereich B sind die beiden Vliesbandabschnitte 30a und 30b miteinander verklebt.

Die einzelnen Vliesbandabschnitte der Vlieshülle sind im Allgemeinen ca. 0,2 mm dick. Im Überlappungsbereich hingegen ist die Vlieshülle etwa doppelt so dick. Durch die Verdickung der Vlieshülle entsteht auch an der sie umschließenden äußeren Schicht beziehungsweise an dem die äußere Schicht umgebenden Kabelmantel eine Verdickung.-Die Durchmessererhöhung an den Verdickungsstellen ist insbesondere dann kritisch, wenn die Spezifikationen und Anforderungen an das Kabel keine Durchmessererhöhungen erlauben. Dies ist beispielsweise dann der Fall, wenn zur Verlegung der Lichtwellenleiterkabel ein Einblasverfahren angewendet wird. Zu diesem Zweck werden bei der Kabelverlegung Leerrohre verlegt, in die nachträglich die Lichtwellenleiteradern mit Druckluft eingeblasen werden. Die Leerrohre haben beispielsweise einen Durchmesser von 5 mm bis 8 mm und besitzen eine gleitfähige Innenbeschichtung. Die Verlegelänge kann zwischen 500 m und 1000 m betragen, wobei auch enge Biegungen überwunden werden müssen. Die optischen Übertragungselemente sind mit einer speziellen Beschichtung ausgestattet, die ein Gleiten in dem Leerrohr ermöglicht. Die Genauigkeit des Durchmessers, die erforderlich ist, um die optischen Übertragungselemente mit dem sie umgebenden Vlies in die dünnen Röhren einzublasen, beträgt typischerweise +/-0,2 mm. Durch die beschriebene äußere Durchmessererhöhung des Kabelmantels an den Überlappungsstellen zweier Vliesbandabschnitte kommt es oftmals beim Einblasen von Lichtwellenleiteradern in die Leerrohre zu Problemen.

Neben den Durchmessererhöhungen durch die Doppelschicht der sich überlappenden Vliesbandabschnitte wird das Band an diesen Stellen außerdem deutlich steifer, sodass eine Verformbarkeit des Bandes eingeschränkt wird. Diese eingeschränkte Verformbarkeit in Querrichtung kann zu lokalen Durchmessererhöhungen führen, die sich problematisch auswirken, wenn bei einem Einblasvorgang in ein Leerrohr enge Biegungen überwunden werden müssen.

Des Weiteren wirkt sich die an den Überlappungsbereichen zweier Vliesbandabschnitte auftretende erhöhte Biegesteifigkeit des Vliesbands nachteilig beim Fertigungsprozess des optischen Kabels aus. Beim Herstellungsprozess des optischen Kabels wird das zunächst planar geformte Vliesband zu einer Hülle geformt, die später den Kabelkern umgibt. Dazu wird das planar geformte Vliesband, das aus mehreren Vliesbandabschnitte besteht, in ein Formrohr eingeführt. Am Ende des Formrohres tritt das nun durch das Formrohr zu einer Vlieshülle geformt Vliesband wieder hervor.

An der Austrittsöffnung des Formrohres wird ein Polymerschlauch um das hüllförmig Vliesband extrudiert. Der Polymerschlauch liegt zunächst als eine Polymerschmelze vor, die nach ihrer Abkühlung den Polymerschlauch beziehungsweise die in Figur 1 gezeigte äußere Schicht 2 bildet. Wenn das hüllförmig geformte Vliesband am Ende des Formrohres wieder heraustritt, kommt es zu einem Aufklaffen der Vlieshülle, da die Längsseiten des Vliesbandes im Formrohr im Allgemeinen nicht miteinander verklebt werden. Da die Biegesteifigkeit an den Überlappungbereichen zweier Vliesbandabschnitte erhöht ist, kommt es insbesondere an diesen Stellen zu einem erhöhten Aufklaffbestreben des hüllförmig geformten Vliesbandes. Dadurch wird auch die Polymerschmelze auseinander gezogen. Nach Abkühlung der Polymerschmelze kommt es an den Überlappungsbereichen zweier Vliesbandabschnitte daher zu einer Deformation des Polymerschlauches beziehungsweise zu lokalen Verdickungsstellen.

Die Druckschrift EP 0 269 778 A1 beschreibt eine quellfähige Kabelbandage und ein Verfahren zu ihrer Herstellung. Eine quellfähige Kabelbandage aus Vliesstoff mit eingelagertem Quellpuder enthält Viskose- und 5 bis 25 Gewichtsprozent ab 80° C wasserlösliche Polyvinylalkohol-Fasern sowie ein wasserlösliches Bindemittel. Die Bandage zeigt im Querschnitt keine erkennbare Schichtung mehr. Hieraus resultiert ein einheitlicher Flächendurchgangswiderstand. Eine weitere Eigenschaft der Bandage besteht in ihrer sofortigen und dabei nahezu vollständigen Quellfähigkeit bei Wassereintritt in das Kabel. Das beschädigte Kabel ist somit sofort längswasserdicht versiegelt. Bei dem Herstellungsverfahren eines solchen Kabels wird auf ein Trägervlies aus Viskose- und 5 bis 25 Gewichtsprozent schwer löslichen Polyvinylalkohol-Fasern Quellpuder aufgebracht, mit einem gleichartigen Vlies abgedeckt und das Flächengebilde beidseitig mit einer wässrigen, aufgeschäumten Bindemittellösung so vollständig imprägniert, dass gerade noch keine Quellung des Quellpuders einsetzt. Anschließend wird der Verbund durch Heißluft versiegelt.

Die Druckschrift EP 0 540 815 A1 befasst sich mit einer quellfähigen Kabelbandage mit einer in Längsrichtung hoch zugfesten Vliesstoffschicht. Ein Superabsorber in Auftragsmengen von 15 bis 50 g/qm ist auf einer Fläche des Vliesstoffträgers mittels einer höchstens 3 g/qm betragenden Bindemittelmenge fixiert. Ein zweiter Bindemittelauftrag liegt als gleichmäßiges, sich wiederholendes Druckmuster vor, welches 10 % bis 20 % der Superabsorber-Fläche abdeckt. Das Druckmuster hat die Form von Punkten, Linien oder Stegen. Eine solche Kabelbandage quillt bei Wassereinwirkung schon nach einer Minute um mindestens 90 % des Endwertes der Quellhöhe auf. Eine derartige Kabelbandage vermag bei Wasserzutritt auch in Hohlräume und Rillen von Kammerkabeln sofort einzudringen und sie auszufüllen.

Die Druckschrift EP 0 890 961 A2 betrifft ein längswasserdichtes elektrisches Kabel mit zumindest einer elektrischen Isolierung und einer darüber liegenden äußeren Leitschicht. Zwischen der äußeren Leitschicht und einem elektrischen Schirm ist eine elektrisch leitfähige Polsterschicht vorgesehen, die durch wenigstens ein unterhalb des Schirms angeordnetes, bei Feuchtigkeitseinwirkung quellende Materialien enthaltendes Quellband gebildet ist. Oberhalb des Schirms ist eine Trennschicht aus Krepppapier vorgesehen. Das elektrische Kabel weist eine hohe Längswasserdichtheit auf und ist einfach und kostengünstig herstellbar.

Aus der Druckschrift DE 201 13 418 U1 ist ein Kabel mit den Merkmalen des Oberbegriffs der Patentansprüche 1 und 16 bekannt. Es wird ein Quellvlies für Lichtwellenleiterkabel angegeben, bei dem aneinander angrenzende Teilabschnitte des Quellvlieses an einer Klebestelle mit Hilfe eines thermisch stabilen Klebstoffs miteinander verbunden sind. An der Klebestelle sind die miteinander zu verbindenden Teilabschnitte des Quellvlieses auf einer Breite von 5 cm bis 10 cm überlappend angeordnet.

Die Aufgabe der vorliegenden Erfindung ist es, ein optisches Kabel mit einer Hülle aus Vlies, die aus mehreren einzelnen Vliesabschnitten zusammengesetzt ist, anzugeben, bei dem eine lokale Durchmessererhöhung des Kabel an einer Verbindungsstelle zweier sich überlappender Vliesbandabschnitte der Vlieshülle reduziert ist. Eine weitere Aufgabe der vorliegenden Erfindung ist es, ein Verfahren zur Herstellung eines optischen Kabels mit einer Hülle aus Vlies, die aus mehreren einzelnen Vliesabschnitten zusammengesetzt ist, anzugeben, bei dem eine lokale Durchmessererhöhung eines Kabels an einer Verbindungsstelle zweier sich überlappender Vliesbandabschnitte der Vlieshülle reduziert ist.

Die Aufgabe betreffend das optische Kabel wird gelöst durch ein optisches Kabel mit einem in Längsrichtung ausgedehnten Kabelkern mit mindestens einem Lichtwellenleiter und mit einer Vlies enthaltenden Hülle, die den Kabelkern umgibt und mindestens einen ersten und zweiten Abschnitt aufweist. Die beiden Abschnitte der Hülle überlappen sich an ihren jeweiligen Enden in einem Überlappungsbereich und sind in dem Überlappungsbereich miteinander verbunden. Mindestens einer der beiden Abschnitte der Hülle weist in dem Überlappungsbereich mehrere Schnitte auf.

Ein derartiges optisches Kabel weist im Überlappungsbereich eine deutlich geringere oder gar keine Durchmessererhöhung auf, als dies bei einem ungeschlitzten Vliesband der Fall ist. Durch die Schnitte an den Verbindungsstellen zweier Vliesbandabschnitte ist das Aufklaffbestreben des Vliesbandes während der Herstellung des Kabels deutlich reduziert. Dies wirkt sich bei der Fertigung des Kabels insbesondere dann aus, wenn die äußere Umhüllung um das Vliesband herum in Form eines Polymerschlauches extrudiert wird. Da die intrinsische Steifigkeit des Vliesbandes durch die Schnitte reduziert ist, wird die Polymerschmelze zur Formung des Polymerschlauches nicht mehr so stark, wie dies bei einem ungeschlitzten Vliesband der Fall ist, auseinander gezogen. Lokale Durchmessererhöhungen des Kabels beziehungsweise eine Deformation des Polymerschlauches an den Verbindungsstellen der Vliesbandabschnitte können somit weitgehend bis vollständig vermieden werden.

Die Verbindungsstellen der Vliesbandabschnitte werden in Bezug auf eine Verformbarkeit des Vliesbandes in Querrichtung flexibler, da eine Vielzahl der für die Steifigkeit des Vliesbandes verantwortlichen Fasern in Querrichtung durchtrennt sind. Von den Fasern in Längsrichtung, die für die Zugfestigkeit des Vliesbandes verantwortlich sind, werden durch das Anbringen der Schnitte in Längsrichtung und die Schmalheit der Schnitte nur wenige Fasern durchtrennt. Die Querschnittsfläche des hüllförmigen Vliesbandes hat sich nicht geändert. Daher bleibt die Zugfestigkeit des Vliesbandes durch das Anbringen von Schnitten im Bereich der Überlappungs- bzw. Verbindungsstellen erhalten.

Die mehreren Schnitte verlaufen vorzugsweise in der Längsrichtung des Kabelkerns.

Gemäß einer Weiterbildung des optischen Kabels weisen die mehreren Schnitte eine Komponente in der Längsrichtung des Kabelkerns und eine Komponente in einer Querrichtung des Kabelkerns auf. Die Komponente in Längsrichtung ist dabei größer als die Komponente in Querrichtung. Die Schnitte verlaufen dann quer zur Längsausdehnungsrichtung des Kabels.

Nach einem weiteren Merkmal des optischen Kabels erstrecken sich die mehreren Schnitte von einem Ende zum anderen Ende des Überlappungsbereiches.

Eine Ausführungsform des optischen Kabels sieht vor, dass die mehreren Schnitte des ersten Abschnitts der Hülle deckungsgleich zu den mehreren Schnitten des zweiten Abschnitts der Hülle verlaufen. Dann können die Schnitte nach dem Zusammenfügen in beide Bandabschnitte geschnitten werden.

Eine andere Ausführungsform sieht vor, dass die mehreren Schnitte des ersten Abschnitts der Hülle versetzt zu den mehreren Schnitten des zweiten Abschnitts der Hülle verlaufen. Dann können die Schnitte bereits vor dem Zusammenfügen der beiden Bandabschnitte angebracht werden.

Bei einer Weiterbildung des optischen Kabels weisen die beiden Abschnitte der Hülle im Überlappungsbereich jeweils vier Schnitte auf.

Die mehreren Schnitte weisen vorzugsweise jeweils eine Länge zwischen 10 mm und 20 mm auf. Gemäß einer weiteren Ausführungsvariante des optischen Kabels befinden sich zwischen den Schnitten der Abschnitte der Hülle jeweils ungeschnittene Segmente des jeweiligen Abschnitts der Hülle mit einer Breite von annähernd 2 mm.

Die beiden Abschnitte der Hülle sind im Überlappungsbereich vorzugsweise miteinander verklebt.

Vorzugsweise ist vorgesehen, dass die beiden Abschnitte der Hülle jeweils ein quellfähiges Material enthalten, das bei Wasserkontakt eine Volumenvergrößerung bewirkt. Die beiden Abschnitte der Hülle können jeweils ein quellfähiges Puder aus einem Salz einer Acrylsäure enthalten.

Gemäß einer anderen Ausführungsform des optischen Kabels enthalten die beiden Abschnitte der Hülle jeweils ein Grundmaterial aus Polyester.

Die Hülle ist bevorzugt von einer äußeren Schicht umgeben, die als ein Polymerschlauch ausgebildet ist.

Gemäß eines weiteren Merkmals des optischen Kabels umgeben die Abschnitte der Hülle verschiedene hintereinander angeordnete Längsabschnitte des Kabels umgeben.

Im Folgenden wird ein Vliesband angegeben, das mindestens einen ersten und zweiten Vliesbandabschnitt aus einem Vliesstoff umfasst. Der erste und zweite Vliesbandabschnitt überlappen sich an ihren jeweiligen Enden in einem Überlappungsbereich und sind in dem Überlappungsbereich miteinander verbunden. Der Vliesstoff mindestens eines der beiden Vliesbandabschnitte weist in dem Überlappungsbereich mehrere Schnitte auf.

Gemäß einer Weiterbildung des Vliesbandes weist das Vliesband Längsseiten und Querseiten auf, wobei die Längsseiten vermutlich länger als die Querseiten sind. Die mehreren Schnitte im Überlappungsbereich der beiden Vliesbandabschnitte verlaufen in einer Längsrichtung entlang der Längsseiten des Vliesbandes.

Es ist auch möglich, dass die mehreren Schnitte im Überlappungsbereich der beiden Vliesbandabschnitte des Vliesbandes eine Komponente in Längsrichtung des Vliesbandes und eine Komponente in Querrichtung des Vliesbandes aufweisen, wobei die Komponente in Längsrichtung größer als die Komponente in Querrichtung ist.

Vorzugsweise sind die mehreren Schnitte im Überlappungsbereich der beiden Vliesbandabschnitte jeweils in einem Abstand von 2 mm angeordnet und weisen eine Länge zwischen 10 mm und 20 mm auf.

Bei einer weiteren Ausgestaltung des Vliesbandes enthält das Vliesband ein polyesterhaltiges Grundmaterial.

Des Weiteren enthält das Vliesband bevorzugt ein quellfähiges Material, das bei Wasserkontakt eine Volumenvergrößerung bewirkt. Dieses Material kann beispielsweise ein bei Wasserkontakt quellfähiges Puder aus einem Salz einer Acrylsäure enthalten.

Gemäß einer weiteren Ausführungsform weist das Vliesband eine erste und zweite Lage des Grundmaterials auf. Bei dieser Sandwichausbildung des Vliesbands ist das bei Wasserkontakt quellfähige Material zwischen der ersten und zweiten Lage des Grundmaterials angeordnet.

Im Folgenden wird ein Verfahren zur Herstellung eines Vliesbandes angegeben. Es ist ein Vliesstoff vorzusehen, aus dem ein erster Vliesbandabschnitt herausgeschnitten wird, wobei der erste Vliesbandabschnitt Längsseiten und Querseiten aufweist und die Längsseiten länger als die Querseiten sind. Aus dem Vliesstoff wird ein zweiter Vliesbandabschnitt herausgeschnitten, wobei der zweite Vliesbandabschnitt Längsseiten und Querseiten aufweist, wobei die Längsseiten länger als die Querseiten sind. In jeweils einen an die Querseiten angrenzenden Bereich mindestens eines der beiden Vliesbandabschnitte werden Schnitte angebracht, wobei die Schnitte mindestens eine Komponente in einer Längsrichtung entlang der Längsseiten der beiden Vliesbandabschnitte aufweisen. Der erste und zweite Vliesbandabschnitt werden in einem Überlappungsbereich verbunden, in dem der an eine der Querseiten des ersten Vliesbandabschnitts angrenzende Bereich des ersten Vliesbandabschnitts mit dem an eine der Querseiten des zweiten Vliesbandabschnitts angrenzenden Bereich des zweiten Vliesbandabschnitts verklebt wird.

Das Verfahren zur Herstellung eines Vliesbandes sieht des Weiteren vorzugsweise vor, dass in jeweils einen an die Querseiten angrenzenden Bereich mindestens eines der beiden Vliesbandabschnitte mehrere Schnitte angebracht werden, wobei die Schnitte jeweils eine Komponente in der Längsrichtung entlang der Längsseiten der beiden Vliesbandabschnitte und eine Komponente in einer Querrichtung der beiden Vliesbandabschnitte aufweisen. Die jeweilige Komponente in Längsrichtung ist dabei größer als die jeweilige Komponente in Querrichtung.

Bei einer Ausbildungsform ist vorgesehen, die Schnitte nach Verbinden der beiden Vliesbandabschnitte vorzusehen.

Bei einem Verfahren zur Herstellung eines optischen Kabels wird ein Kabelkern bereitgestellt, der sich in eine Längsrichtung erstreckt und mindestens einen Lichtwellenleiter umfasst. Des Weiteren wird ein Vliesband bereitgestellt, das einen ersten und zweiten Vliesbandabschnitt mit jeweils Längsseiten und Querseiten aufweist, wobei die Längsseiten länger als die Querseiten sind. Das Vliesband weist einen Überlappungsbereich auf, in dem die beiden Vliesbandabschnitte miteinander verbunden sind. In dem Überlappungsbereich weist das Vliesband mehrere Schnitte auf, wobei die Schnitte mindestens eine Komponente in der Längsrichtung des Kabelkerns aufweisen. Das Vliesband wird zu einer Vlieshülle zur Umhüllung des Kabelkerns geformt. Anschließend wird eine äußere Schicht, die vorzugsweise ein Polymermaterial enthält, um die Vlieshülle extrudiert.

Eine Ausgestaltung des Verfahrens zur Herstellung eines optischen Kabels sieht vor, dass die mehreren Schnitte jeweils eine Komponente in der Längsrichtung des Kabelkerns und eine Komponente in einer Querrichtung des Kabelkerns aufweisen, wobei die jeweilige Komponente in Längsrichtung größer als die jeweilige Komponente in Querrichtung ist. Nach einem weiteren Merkmal zur Herstellung eines optischen Kabels weist die äußere Schicht nach dem Extrudieren um die Vlieshülle einen konstanten Durchmesser auf.

Ein derart-hergestelltes optisches Kabel wird-bevorzugt zum Einblasen in eine Leerröhre verwendet.

Die Erfindung wird im Folgenden anhand von Figuren, die Ausführungsbeispiele der vorliegenden Erfindung zeigen, näher erläutert. Es zeigen:
- Figur 1: einen Querschnitt durch ein optisches Kabel mit einer Hülle aus Vlies,
- Figur 2: ein optisches Kabel in Längsrichtung mit einer Hülle aus Vlies,
- Figur 3: ein optisches Kabel mit einer Hülle aus Vlies gemäß der Erfindung,
- Figur 4A: einen einzelnen Vliesbandabschnitt eines Vliesbandes gemäß der Erfindung,
- Figur 4B: eine Draufsicht auf einen an eine Querseite eines Vliesbandabschnitts angrenzenden Bereich gemäß der Erfindung,
- Figur 4C: eine Struktur eines Vliesbandes gemäß der Erfindung,
- Figur 5: eine Vorrichtung zum Anbringen von Schnitten in einen an eine Querseite angrenzenden Bereich eines Vliesbandabschnitts gemäß der Erfindung.

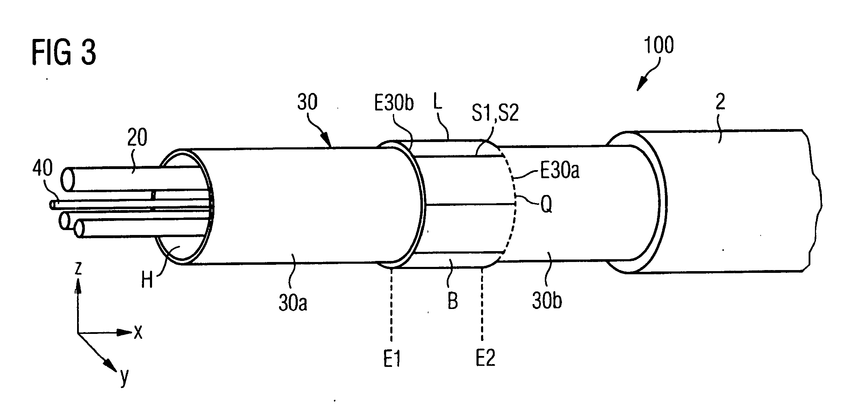

Figur 3 zeigt ein optisches Kabel 100 mit einem Kabelkern 1, der sich in einer Längsrichtung x erstreckt. Der Kabelkern weist drei optische Übertragungselemente 20, beispielsweise Lichtwellenleiteradern, und ein Quellgarn 40 auf. Zur thermischen Isolation und zur Verhinderung der Ausbreitung von Wasser in Längsrichtung des optischen Kabels ist der Kabelkern von einer Hülle 30 aus einem Vlies umgeben, die ihrerseits von einer äußeren Schicht 2, die als ein Polymerschlauch ausgebildet ist, umgeben ist. Die Vlieshülle 30 wird geformt, indem das Vliesband durch ein Formrohr geführt wird. Am Ende des Formrohres tritt das zuvor planare Vliesband als hüllförmiges Vliesband hervor. Da aus fertigungstechnischen Gründen eine Vlieshülle, die aus einem einzigen hüllförmig geformten Vliesband besteht und sich über die Gesamtlänge des optischen Kabels bzw. des Kabelkerns erstreckt, nicht herstellbar ist, setzt sich die Vlieshülle 30 aus einzelnen hüllförmig geformten Vliesbandabschnitten 30a und 30b zusammen, die - außer im Bereich der Überlappungsstellen - verschiedene hintereinander angeordnete Längsabschnitte des Kabels bzw. des Kabelkerns umgeben. Wie bereits anhand von Figur 2 erläutert, sind die beiden Vliesbandabschnitte in einem Überlappungsbereich B miteinander verklebt.

Im Gegensatz zur Ausführungsform der Figur 2 weist mindestens einer der Vliesbandabschnitte 30a und 30b im Bereich der Überlappung B mehrere Schnitte S1, S2 auf. Die Schnitte in einem oder in beiden der sich überlappenden Vliesbandabschnitte innerhalb des genannten Bereichs erstrecken sich dabei ausgehend von einem Ende E30a des Vliesbandabschnitts 30a in Längsrichtung x des optischen Kabels bis zu einem Ende E1 des Überlappungsbereichs B beziehungsweise von einem Ende E30b des Vliesbandabschnitts 30b in Längsrichtung x des optischen Kabels bis zu einem Ende E2 des Überlappungsbereichs B. Vorzugsweise weisen beide Vliesbandabschnitte Schnitte auf. In diesem Fall ist es empfehlenswert, wenn die Schnitte S1 im Vliesbandabschnitt 30a annähernd deckungsgleich zu den Schnitten S2 im Vliesbandabschnitt 30b verlaufen. Es ist jedoch auch möglich, die Schnitte S1 des Vliesbandabschnitts 30a und die Schnitte S2 des Vliesbandabschnitts 30b versetzt zueinander anzuordnen.

Die Schnitte, die sich vorzugsweise über die gesamte Länge des Überlappungsbereichs erstrecken, weisen im Allgemeinen eine Länge zwischen 10 mm und 20 mm auf.

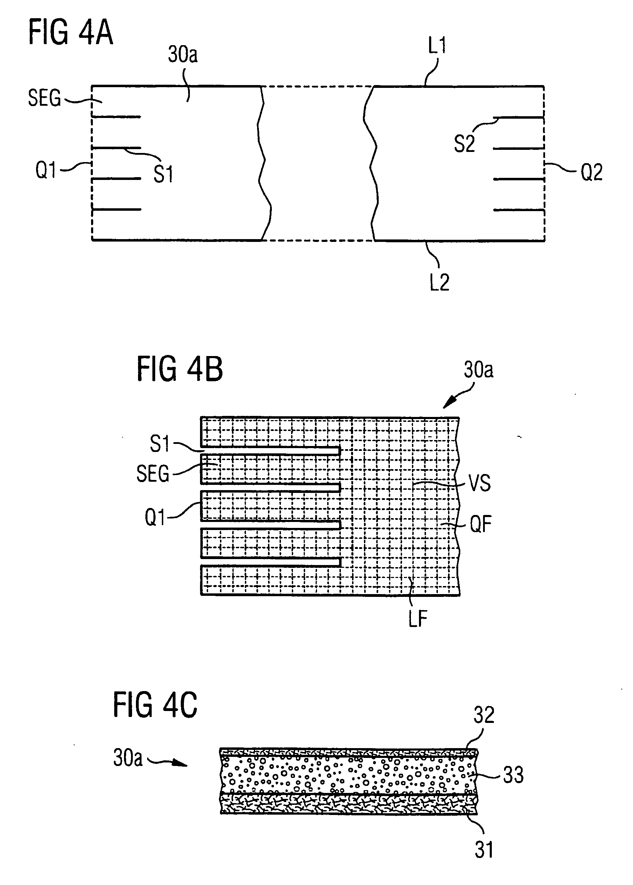

Zur Herstellung eines langen Vliesbandes werden aus einem großflächigen Vliestuch zunächst einzelne rechteckförmige Vliesbandabschnitte herausgeschnitten. Figur 4A zeigt einen aus einem Vliestuch herausgeschnittenen Vliesbandabschnitt 30a. Der längs ausgedehnte Vliesbandabschnitt weist zwei Längsseiten L1 und L2 an deren Enden sich zwei Querseiten Q1 und Q2 befinden, wobei die Längsseiten länger als die Querseiten sind. In einem Bereich der Querseite Q1 sind Schnitte S1 und in einem Bereich der Querseite Q2 sind Schnitte S2 angebracht. Die Vliesbandabschnitte weisen im Allgemeinen eine typische Breite von ca. 5 mm bis 10 mm auf. Bei einer Breite eines Abschnitts von etwa 10 mm werden vorzugsweise vier Schnitte in jeden an die Querseiten Q1 und Q2 angrenzenden Bereich angebracht. Zwischen den einzelnen Schnitten befinden sich jeweils Segmente SEG des Vliesstoffs von einer Breite von ca. 2 mm.

Figur 4B zeigt einen Bereich einer Querseite Q1 des Vliesbandabschnitts 30a in vergrößerter Darstellung. Das Material des Vliesbandabschnitts besteht aus einer netzartigen Struktur von Längsfasern LF und Querfasern QF eines Vliesstoffs VS. Zwischen nicht geschnittenen Segmentabschnitten SEG sind im Bereich der Querseite Q1 vier Schnitte S1 angebracht. Durch die Schnitte werden eine Vielzahl der in Querrichtung verlaufenden Fasern QF durchtrennt, wohingegen eine weitaus geringere Anzahl von in Längsrichtung verlaufenden Fasern LF durchtrennt werden, da die Schnitte S1 sehr schmal sind. Weil in Längsrichtung verlaufende Fasern LF für die Zugfestigkeit des Vliesbandes verantwortlich sind, bleibt die Zugfestigkeit des Vliesbandes trotz der Schnitte S1 und S2 in den Überlappungsbereichen der einzelnen Vliesbandabschnitte weitgehend erhalten. Die Steifigkeit in Querrichtung, für die die in Querrichtung verlaufenden Fasern QF maßgeblich sind, wird hingegen deutlich reduziert.

Dadurch ist auch die Steifigkeit einer Vlieshülle an den Überlappungsbereichen zweier endseitig geschnittener Vliesbandabschnitte reduziert, da eine rückstellende Kraft durch quer verlaufende Fasern nicht mehr gegeben ist, sodass die Verbindungsstellen in den Überlappungsbereichen in Bezug auf eine Verformung in Querrichtung flexibler werden. Die Schnitte im Bereich der Überlappung zweier Vliesbandabschnitte verlaufen daher vorzugsweise in Längsrichtung x des Kabelkerns. Es besteht jedoch auch die Möglichkeit, die Schnitte so anzubringen, dass diese neben einer Komponente in Längsrichtung x des Kabelkerns auch noch eine Komponente in Querrichtung y des Kabelkerns aufweisen. Die Querrichtung verläuft dabei senkrecht zur Längsrichtung. Die Komponente der Schnitte in Längsrichtung sollte jedoch größer als die Komponente in Querrichtung sein, da die Komponente der Schnitte in Längsrichtung die Biegesteifigkeit beeinflusst.

Die Biegesteifigkeit eines Vliesbandes beträgt abseits der Klebestelle ca. 1,5 * 10⁻⁶ Nm². An einer ungeschlitzten Klebestelle ist die Biegesteifigkeit deutlich erhöht und beträgt bis zu 3,2 * 10⁻⁶ Nm². Hingegen wird an einer geschlitzten Klebestelle die Biegesteifigkeit auf-einen Wert von 0,38 * 10⁻⁶ Nm² reduziert. Damit können derartige Klebestellen in einem Formwerkzeug geformt werden. Die Form wird während der Extrusion der Vlieshülle um die optischen Übertragungselemente herum beibehalten. Um die Vlieshülle wird anschließend ein Polymerschlauch extrudiert. Der Polymerschlauch liegt bei der Extrusion als Polymerschmelze auf dem zu einer Vlieshülle geformten Vliesband auf. Durch die Reduzierung der Biegesteifigkeit an den Überlappungsstellen zweier Vliesbandabschnitte wird das Auseinanderziehen der Polymerschmelze verhindert. Somit werden Deformationen beziehungsweise Verdickungsstellen des Polymerschlauches nach Abkühlung der Polymerschmelze im Bereich der Verbindungsstellen zweier Vliesbandabschnitte vermieden. Dadurch wird beispielsweise auch das Einblasen von Lichtwellenleiter mit der sie umgebenden Vliesumhüllung in Leerrohre bei der Kabelverlegung deutlich erleichtert.

Der Vliesstoff besteht im Allgemeinen aus einem polyesterhaltigen Grundmaterial und aus Partikeln eines bei Wasserkontakt quellenden Materials. Das Material ist im Allgemeinen wasserunlöslich. Das polyesterhaltige Grundmaterial kann beispielsweise in ein bei Wassereintritt aufquellendes Bindemittel getränkt sein. Das Quellmittel kann auch als ein quellfähiges Puder ausgebildet sein, das Bindemittel oder vernetztes Natriumsalz einer Polyacrylsäure enthält.

Figur 4C zeigt eine "Sandwich"-Struktur des Vliesstoffs. Puderpartikel sind zwischen einzelnen Vliesstoffschichten eingebunden. Die Struktur des Vliesstoffs der Figur 4C zeigt Partikel 33 des Quellpuders, die zwischen einem Deckvliesstoff 32 und einem Basisvliesstoff 31 eingebunden sind.

Figur 5 zeigt eine Vorrichtung zum Anbringen von Schnitten in einem Vliesbandabschnitt 30a. Dazu wird der anzuschneidende Bereich auf der Querseite des Vliesbandes von einer Schablone 200 überdeckt. Die Schablone ist beispielsweise als eine metallische Platte ausgebildet, die schmale Schlitze 201 aufweist. Zur Durchtrennung des Vliesstoffs wird ein Schneidewerkzeug 300 in die Schlitze 201 der metallischen Platte eingefahren. Das Schneidwerkzeug 300 umfasst beispielsweise rotierende Messer 301, die parallel zueinander angeordnet sind.

### Bezugszeichenliste

- 1: Kabelkern
- 2: äußere Schicht, Polymerschlauch
- 10: Lichtwellenleiter
- 20: optisches Übertragungselement
- 30: Vliesband
- 30a, 30b: Vliesbandabschnitt
- 31: Basisvliesstoff
- 32: Deckvliesstoff
- 33: quellfähiges Puder
- 40: Quellgarn
- 100: optisches Kabel
- 200: Schablone
- 201: Schlitz
- 300: Schneidwerkzeug
- 301: Messerklinge
- B: Überlappungsbereich
- H: Hohlraum
- L: Längsseite
- LF: Längsfaser
- Q: Querseite
- QF: Querfaser
- S: Schnitt
- SEG: Segment
- VS: Vliesstoff
- x: Längsrichtung
- y: Querrichtung

## Patentansprüche

1. Optisches Kabel
- mit einem in Längsrichtung (x) ausgedehnten Kabelkern (1) mit mindestens einem Lichtwellenleiter (10),
- mit einer Vlies enthaltenden Hülle (30), die den Kabelkern (1) umgibt und mindestens einen ersten und zweiten Abschnitt (30a, 30b) aufweist,
- bei dem sich die beiden Abschnitte (30a, 30b) der Hülle an ihren jeweiligen Enden (E30a, E30b) in einem Überlappungsbereich (B) überlappen und in dem Überlappungsbereich (B) miteinander verbunden sind,
**dadurch gekennzeichnet, dass** mindestens einer der beiden Abschnitte (30a, 30b) der Hülle in dem Überlappungsbereich (B) mehrere Schnitte (S1, S2) aufweist.

2. Optisches Kabel nach Anspruch 1,
bei dem die mehreren Schnitte (S1, S2) in der Längsrichtung des Kabelkerns verlaufen.

3. Optisches Kabel nach Anspruch 1,
bei dem die mehreren Schnitte (S1, S2) eine Komponente in der Längsrichtung des Kabelkerns und eine Komponente in einer Querrichtung des Kabelkerns aufweisen, wobei die Komponente in Längsrichtung größer als die Komponente in Querrichtung ist.

4. Optisches Kabel nach einem der Ansprüche 1 bis 3,
bei dem sich die mehreren Schnitte (S1, S2) von einem Ende (E30a) zum anderen Ende (E30b) des Überlappungsbereiches (B) erstrecken.

5. Optisches Kabel nach einem der Ansprüche 1 bis 4,
bei dem die mehreren Schnitte (S1) des ersten Abschnitts (30a) der Hülle (30) deckungsgleich zu den mehreren Schnitten (S2) des zweiten Abschnitts (30b) der Hülle verlaufen.

6. Optisches Kabel nach einem der Ansprüche 1 bis 4,
bei dem die mehreren Schnitte (S1) des ersten Abschnitts (30a) der Hülle (30) versetzt zu den mehreren Schnitten (S2) des zweiten Abschnitts (30b) der Hülle verlaufen.

7. Optisches Kabel nach einem der Ansprüche 1 bis 6,
bei dem die beiden Abschnitte (30a, 30b) der Hülle im Überlappungsbereich (B) jeweils vier Schnitte (S1, S2) aufweisen.

8. Optisches Kabel nach einem der Ansprüche 1 bis 7,
bei dem die mehreren Schnitte (S1, S2) jeweils eine Länge zwischen 10 mm und 20 mm aufweisen.

9. Optisches Kabel nach einem der Ansprüche 1 bis 8,
bei dem sich zwischen den Schnitten (S1, S2) der Abschnitte (30a, 30b) der Hülle jeweils ungeschnittene Segmente (SEG) des jeweiligen Abschnitts der Hülle mit einer Breite von annähernd 2 mm befinden.

10. Optisches Kabel nach einem der Ansprüche 1 bis 9,
bei dem die beiden Abschnitte (30a, 30b) der Hülle im Überlappungsbereich (B) miteinander verklebt sind.

11. Optisches Kabel nach einem der Ansprüche 1 bis 10,
bei dem die beiden Abschnitte (30a, 30b) der Hülle jeweils ein quellfähiges Material enthalten, das bei Wasserkontakt eine Volumenvergrößerung bewirkt.

12. Optisches Kabel nach Anspruch 11,
bei dem die beiden Abschnitte (30a, 30b) der Hülle jeweils ein quellfähiges Puder aus einem Salz einer Acrylsäure enthalten.

13. Optisches Kabel nach einem der Ansprüche 1 bis 12,
bei dem die beiden Abschnitte (30a, 30b) der Hülle jeweils ein Grundmaterial aus Polyester enthalten.

14. Optisches Kabel nach einem der Ansprüche 1 bis 13,
bei dem die Hülle (30) von einer äußeren Schicht (2) umgeben ist.

15. Optisches Kabel nach einem der Ansprüche 1 bis 14,
bei dem die Abschnitte (30a, 30b) der Hülle verschiedene hintereinander angeordnete Längsabschnitte des Kabels umgeben.

16. Verfahren zur Herstellung eines optischen Kabels, umfassend die folgenden Schritte:
- Bereitstellen eines Kabelkerns (1), der sich in einer Längsrichtung erstreckt und mindestens einen Lichtwellenleiter (10) umfasst,
- Bereitstellen eines Vliesbandes (30), das einen ersten und zweiten Vliesbandabschnitt (30a, 30b) mit jeweils Längsseiten (L1, L2) und Querseiten (Q1, Q2) aufweist, wobei die Längsseiten länger als die Querseiten sind, das einen Überlappungsbereich (B) aufweist, in dem die beiden Vliesbandabschnitte miteinander verbunden sind,
- Formen des Vliesbandes (30) zu einer Vlieshülle zur Umhüllung des Kabelkerns (1),
**dadurch gekennzeichnet, dass** das Vliesband in dem Überlappungsbereich (B) mehrere Schnitte (S1, S2) aufweist, wobei die Schnitte (S1, S2) mindestens eine Komponente in der Längsrichtung des Kabelkerns aufweisen, und eine äußere Schicht (2) um die Vlieshülle (30) extrudiert wird.

17. Verfahren zur Herstellung eines optischen Kabels nach Anspruch 16,
bei dem die mehreren Schnitte (S1, S2) jeweils eine Komponente in der Längsrichtung des Kabelkerns und eine Komponente in einer Querrichtung des Kabelkerns aufweisen, wobei die jeweilige Komponente in Längsrichtung größer als die jeweilige Komponente in Querrichtung ist.

18. Verfahren zur Herstellung eines optischen Kabels nach einem der Ansprüche 16 oder 17,
bei dem die äußere Schicht (2) nach dem Extrudieren um die Vlieshülle einen konstanten Durchmesser aufweist.

19. Verwendung eines optischen Kabels nach einem der Ansprüche 1 bis 15 zum Einblasen in eine Leerröhre.

## Claims

1. Optical cable, comprising
- a cable core (1) expanded in the longitudinal direction (x) and having at least one optic fibre (10),
- a sleeve (30), which comprises a nonwoven, surrounds the cable core (1) and has at least one first and second portion (30a, 30b),
- the two portions (30a, 30b) of the sleeve overlapping at their respective ends (E30a, E30b) in a region of overlap (B) and being joined to one another in the region of overlap (B),
**characterized in that** at least one of the two portions (30a, 30b) of the sleeve has a number of cuts (S1, S2) in the region of overlap (B).

2. Optical cable according to Claim 1, in which the number of cuts (S1, S2) run in the longitudinal direction of the cable core.

3. Optical cable according to Claim 1, in which the number of cuts (S1, S2) have a component in the longitudinal direction of the cable core and a component in a transverse direction of the cable core, the component in the longitudinal direction being greater than the component in the transverse direction.

4. Optical cable according to one of Claims 1 to 3, in which the number of cuts (S1, S2) extend from one end (E30a) to the other end (E30b) of the region of overlap (B).

5. Optical cable according to one of Claims 1 to 4, in which the number of cuts (S1) of the first portion (30a) of the sleeve (30) run congruently in relation to the number of cuts (S2) of the second portion (30b) of the sleeve.

6. Optical cable according to one of Claims 1 to 4, in which the number of cuts (S1) of the first portion (30a) of the sleeve (30) run offset in relation to the number of cuts (S2) of the second portion (30b) of the sleeve.

7. Optical cable according to one of Claims 1 to 6, in which the two portions (30a, 30b) of the sleeve each have four cuts (S1, S2) in the region of overlap (B).

8. Optical cable according to one of Claims 1 to 7, in which the number of cuts (S1, S2) each have a length of between 10 mm and 20 mm.

9. Optical cable according to one of Claims 1 to 8, in which there are between the cuts (S1, S2) of the portions (30a, 30b) of the sleeve in each case uncut segments (SEG) of the respective portion of the sleeve with a width of approximately 2 mm.

10. Optical cable according to one of Claims 1 to 9, in which the two portions (30a, 30b) of the sleeve are adhesively joined to one another in the region of overlap (B).

11. Optical cable according to one of Claims 1 to 10, in which the two portions (30a, 30b) of the sleeve each comprise a swellable material, which brings about an increase in volume on contact with water.

12. Optical cable according to Claim 11, in which the two portions (30a, 30b) of the sleeve each comprise a swellable powder from a salt of an acrylic acid.

13. Optical cable according to one of Claims 1 to 12, in which the two portions (30a, 30b) of the sleeve each comprise a base material of polyester.

14. Optical cable according to one of Claims 1 to 13, in which the sleeve (30) is surrounded by an outer layer (2).

15. Optical cable according to one of Claims 1 to 14, in which the portions (30a, 30b) of the sleeve surround different longitudinal portions of the cable arranged one behind the other.

16. Method for producing an optical cable, comprising the following steps:
- providing a cable core (1), which extends in a longitudinal direction and comprises at least one optic fibre (10),
- providing a nonwoven tape (30), which has a first and a second nonwoven tape portion (30a, 30b) each with longitudinal sides (L1, L2) and transverse sides (Q1, Q2), the longitudinal sides being longer than the transverse sides, and which has a region of overlap (B), in which the two nonwoven tape portions are joined to one another,
- forming the nonwoven tape (30) into a nonwoven sleeve for enclosing the cable core (1),
**characterized in that** the nonwoven tape has a number of cuts (S1, S2) in the region of overlap (B), the cuts (S1, S2) having at least one component in the longitudinal direction of the cable core, and an outer layer (2) is extruded around the nonwoven sleeve (30).

17. Method for producing an optical cable according to Claim 16, in which the number of cuts (S1, S2) each have a component in the longitudinal direction of the cable core and a component in a transverse direction of the cable core, the respective component in the longitudinal direction being greater than the respective component in the transverse direction.

18. Method for producing an optical cable according to either of Claims 16 and 17, in which the outer layer (2) has a constant diameter after being extruded around the nonwoven sleeve.

19. Use of an optical cable according to one of Claims 1 to 15 for blowing into an empty tube.

## Revendications

1. Câble optique
- comprenant une âme (1) de câble s'étendant dans la direction (x) longitudinale et ayant au moins une fibre (10) optique,
- comprenant une gaine (30) contenant un non-tissé, qui entoure l'âme (1) de câble et qui a au moins un premier et un deuxième tronçons (30a, 30b),
- dans lequel les deux tronçons (30a, 30b) de la gaine se chevauchent à leur extrémité (E30a, E30b) respective dans une partie (B) de chevauchement et sont reliés entre eux dans la partie (B) de chevauchement,
**caractérisé en ce qu'**au moins l'un des deux tronçons (30a, 30b) de la gaine a plusieurs entailles (S1, S2) dans la partie (B) de chevauchement.

2. Câble optique suivant la revendication 1,
dans lequel plusieurs entailles (S1, S2) s'étendent dans la direction longitudinale de l'âme du câble.

3. Câble optique suivant la revendication 1,
dans lequel les plusieurs entailles (S1, S2) ont une composante dans la direction longitudinale de l'âme du câble et une composante dans une direction transversale de l'âme du câble, la composante dans la direction longitudinale étant plus grande que la composante dans la direction transversale.

4. Câble optique suivant l'une des revendications 1 à 3,
dans lequel les plusieurs entailles (S1, S2) s'étendent d'une extrémité (E30a) à l'autre extrémité (E30b) de la partie (B) de chevauchement.

5. Câble optique suivant l'une des revendications 1 à 4,
dans lequel les plusieurs entailles (S1) du premier tronçon (30a) de la gaine (30) coïncident avec les plusieurs entailles (S2) du deuxième tronçon (30b) de la gaine.

6. Câble optique suivant l'une des revendications 1 à 4,
dans lequel les plusieurs entailles (S1) du premier tronçon (30a) de la gaine (30) sont décalées par rapport aux plusieurs entailles (S2) du deuxième tronçon (30b) de la gaine.

7. Câble optique suivant l'une des revendications 1 à 6,
dans lequel les deux tronçons (30a, 30b) de la gaine ont respectivement quatre entailles (S1, S2) dans la partie (B) de chevauchement.

8. Câble optique suivant l'une des revendications 1 à 7,
dans lequel les plusieurs entailles (S1, S2) ont respectivement une longueur comprise entre 10 mm et 20 mm.

9. Câble optique suivant l'une des revendications 1 à 8,
dans lequel des segments (SEG) non entaillés du tronçon respectif de la gaine se trouvent, en ayant une largeur d'environ 2 mm, entre les entailles (S1, S2) des tronçons (30a, 30b) de la gaine.

10. Câble optique suivant l'une des revendications 1 à 9,
dans lequel les deux tronçons (30a, 30b) de la gaine sont collés entre eux dans la partie (B) de chevauchement.

11. Câble optique suivant l'une des revendications 1 à 10,
dans lequel les deux tronçons (30a, 30b) de la gaine contiennent respectivement un matériau susceptible de gonfler, qui provoque un agrandissement du volume par contact avec de l'eau.

12. Câble optique suivant la revendication 11,
dans lequel deux tronçons (30a, 30b) de la gaine contiennent respectivement une poudre susceptible de gonfler en un sel d'un acide acrylique.

13. Câble optique suivant l'une des revendications 1 à 12,
dans lequel les deux tronçons (30a, 30b) de la gaine contiennent respectivement une matière de base en polyester.

14. Câble optique suivant l'une des revendications 1 à 13,
dans lequel la gaine (30) est entourée d'une couche (2) extérieure.

15. Câble optique suivant l'une des revendications 1 à 14,
dans lequel les deux tronçons (30a, 30b) de la gaine entourent des tronçons longitudinaux du câble différents disposés l'un derrière l'autre.

16. Procédé de fabrication d'un câble optique comprenant les stades suivants :
- on se procure une âme de câble, qui s'étend dans une direction longitudinale et qui comprend au moins une fibre (10) optique,
- on se procure un ruban (30) de non-tissé, qui a un premier tronçon (30a) et un deuxième tronçon (30b) de ruban de non-tissé ayant respectivement des côtés (L1, L2) longitudinaux et des côtés (Q1, Q2) transversaux, les côtés longitudinaux étant plus grands que les côtés transversaux et qui a une partie (B) de recouvrement dans laquelle les deux tronçons de ruban de non-tissé sont reliés entre eux,
- on transforme le ruban (30) de non-tissé en une gaine de non-tissé pour entourer l'âme (1) du câble,
**caractérisé en ce que** le ruban de non-tissé a plusieurs entailles (S1, S2) dans la partie (B) de chevauchement, les entailles (S1, S2) ayant au moins une composante dans la direction longitudinale de l'âme du câble et une couche (2) extérieure est extrudée autour de la gaine (30) de non-tissé.

17. Procédé de fabrication d'un câble optique suivant la revendication 16,
dans lequel les plusieurs entailles (S1, S2) ont respectivement une composante dans la direction longitudinale de l'âme du câble et une composante dans une direction transversale de l'âme du câble, la composante respective dans la direction longitudinale étant plus grande que la composante respective dans la direction transversale.

18. Procédé de fabrication d'un câble optique suivant la revendication 16 ou 17,
dans lequel la couche (2) extérieure a un diamètre constant après l'extrusion autour de la gaine de non-tissé.

19. Utilisation d'un câble optique suivant l'une des revendications 1 à 15 pour insuffler dans un tube à vide.
